# EUROPÄISCHE PATENTSCHRIFT

(11) **EP 1 764 639 B1**
(45) Veröffentlichungstag und Bekanntmachung des Hinweises auf die Patenterteilung: **04.11.2009**
(21) Anmeldenummer: 06018934.7
(22) Anmeldetag: 11.09.2006
(51) Int. Cl.: G02B 17/06, G02B 23/06

(54) **Schiefspiegler-Teleskop mit drei Spiegelflächen**
Oblique reflector telescope with three mirror surfaces
Télescope à réflecteurs obliques avec trois surfaces miroitées

(30) Priorität: 14.09.2005 DE 102005044910
(43) Veröffentlichungstag der Anmeldung: 21.03.2007
(73) Patentinhaber: Jena-Optronik GmbH, 07745 Jena (DE)
(72) Erfinder: Thorwirth, Günter, Dr., 07646 Laasdorf (DE); Voß, Burkart, Dr., 07778 Dorndorf-Steudnitz (DE)
(74) Vertreter: Freitag, Joachim

(56) Entgegenhaltungen:
- EP-A- 0 656 552
- WO-A-02/50597
- DE-A1- 10 245 559
- GB-A- 2 332 533
- US-A- 3 748 015
- US-A- 4 097 125

## Beschreibung

Die Erfindung betrifft ein Schiefspiegler-Teleskop mit drei Spiegelflächen, bei dem eine optische Abbildung über die drei Spiegelflächen jeweils außeraxial bezüglich ihrer jeweiligen mittleren Spiegelachse erfolgt, wobei die Spiegelachsen aller Spiegelflächen innerhalb einer Ebene angeordnet sind. Die Erfindung findet Anwendung für Erdbeobachtungen aus dem Weltall, insbesondere für abbildende Radiometer.

Spiegelteleskope herkömmlicher Bauart in rotationssymmetrischer Spiegelkonfiguration (z.B. Gregory-, Cassegrain- und Newton-Systeme), wie sie vor allem für astronomische Beobachtungen üblich sind, leiden unter der kontrastmindernden Mittenabschattung durch den im Strahlengang befindlichen Sekundärspiegel sowie durch dessen meist vorhandene Haltestreben.
Abschattungsfreie Spiegelteleskope, sogenannte Schiefspiegler, bestehen im Allgemeinen aus zwei bis vier Spiegeln in unterschiedlich gekippter Anordnung und unterschiedlicher Ausführung (konkav, konvex, teilweise parabolisch bis hyperbolisch etc.). Die Korrektur der Bildfehler erlaubt insbesondere bei den Zweispieglern nur geringe Lichtstärken oder es werden andere aufwendige Korrekturmaßnahmen erforderlich (z.B. Korrekturlinse oder torusförmig deformierte Spiegelfläche etc.).
Tri-Schiefspiegler gehen auf den anastigmatischen Zweispiegler nach A. KUTTER zurück. Letzterer hatte einen konkaven Primär- und einen konvexen Sekundärspiegel gewählt, weil Abbildungsfehler, wie Koma, Astigmatismus und sphärische Aberration, entgegengesetzte Vorzeichen aufweisen und sich somit teilweise kompensieren. Durch Verzicht auf brechende Flächen werden chromatische Fehler ausgeschlossen. Nach KUTTER werden Abschattungen vermieden, weil nur der silhouettierungsfreie Strahlengang eine Abbildung mit höchstmöglichem Kontrast und Auflösungsvermögen garantiert.
Um verbesserte optische Abbildungseigenschaften erreichen zu können, wird bei Spiegelteleskopen die Anzahl der optisch wirksamen Flächen, also die Anzahl der Spiegel erhöht.
In der DE 196 49 841 C2 wird - um trotzdem eine kompakte Bauweise zu ermöglichen - ein Kompakt-Schiefspiegler beschrieben, bei dem optische Flächen mehrfach genutzt werden, wobei jedoch unsymmetrische, parallel zu einer Ebene gekippte Spiegelsysteme verwendet werden. Ungelöst bleibt hierbei das Problem eines erhöhten Justageaufwands.

EP 656 552 zeigt ein weiteres bekanntes System.

Ferner ist in der WO 03/023485 A2 ein abtastendes Sensorsystem mit rotierenden Teleskopkomponenten offenbart, bei dem zwei Teleskopteile mit unterschiedlichen Drehgeschwindigkeiten bewegt werden. Das Justageproblem der Spiegel zueinander ist dabei in gleicher Weise zu verzeichnen.

Eine weitere Gruppe von Schiefspiegleranordnungen, die ihren Ursprung in der US 3,748,015 hat und nach ihrem Erfinder Offner-System genannt wird, weist einen konkaven Hauptspiegel, der in gleich großen und symmetrisch zum Vertex angeordneten Off-Axis-Bereichen als Primär- und Tertiärspiegel benutzt wird, und einen konvexen Nebenspiegel auf, der als Sekundärspiegel eingesetzt ist. Derartige Systeme realisieren eine (1:-1)-Abbildung, indem Haupt- und Nebenspiegel einen gemeinsamen Krümmungsmittelpunkt und eine gemeinsame Symmetrieachse aufweisen, und machen sich die Tatsache zunutze, dass sie als symmetrisch aufgebaute Abbildungssysteme koma- und verzeichnungsfrei sind. Der Nachteil der Offner-Systeme liegt aber darin, dass die Abbildung von Objekten aus dem Unendlichen zu starken Aberrationen im bildseitigen Strahlengang führt.

Eine darauf aufbauende Kamera ist in der DE 102 45 559 A1 beschrieben, wobei innerhalb der Kamera ein Offner-System als reine Zwischenabbildungsoptik für die Abbildung eines von einem Primärobjektiv erzeugten Zwischenbildes auf einen Empfänger offenbart wird. Dabei kommt es lediglich darauf an, zwischen Primärobjektiv, das vorzugsweise austauschbar sein soll, und einem Farbteilersystem optische Schnittstellen (d.h. konjugierte, im Endlichen liegende Bildebenen) zu schaffen, wobei die so gestaltete Zwischenabbildungsoptik eine kurze Baulänge ermöglicht. Eine Abbildung aus dem Unendlichen ist dabei ohne entsprechendes Primärobjektiv nicht realisierbar.

Die GB 2 332 533 A basiert ebenfalls auf einem Offner-Relay-System gemäß US 3,748,015 und verwendet dieses eine zur Überlagerung einer eingekoppelten ausgedehnten Abbildung mit einem Laserpunkt. Die Vorzüge und die Einsatzbeschränkungen sind dieselben, wie sie oben bereits für Offner-Systeme allgemein beschrieben wurden.

Ein weiterer Schiefspiegler ist aus der EP 0 019 447 A1 bekannt, in der ein anastigmatisch abbildendes Drei-Spiegel-Optiksystem aus einem Primärspiegel mit einer Ellipsoidfläche, einem Sekundärspiegel mit Hyperboloidfläche und einem Tertiärspiegel mit einer weiteren Ellipsoidfläche beschrieben ist. Dabei sind alle drei Spiegel in einer Ebene, jedoch gegenüber einer darin festgelegten optischen Achse dezentriert und geneigt angeordnet und bilden ein außeraxiales (,Off-axis'-) System bezüglich Apertur und Feldabbildung. Hierbei sind zwar die Justierungen der Spiegel auf Winkeinstellungen innerhalb einer Ebene beschränkt, die Gesamtanordnung bleibt aber in bezug auf die Minimierung von Abbildungsfehlern immer noch aufwendig.

Der Erfindung liegt die Aufgabe zugrunde, eine neue Möglichkeit zur Realisierung eines nicht abgeschatteten Spiegelteleskops (Schiefspieglers) zu finden, die einen einfachen Aufbau und eine einfache Justierung der Spiegelflächen zueinander gestattet. In einer erweiterten Aufgabenstellung soll eine mehrfache rotierende Abtastung (Abbildung) ermöglicht werden.

Erfindungsgemäß wird die Aufgabe bei einem Schiefspiegler-Teleskop mit drei Spiegelflächen, bei dem eine optische Abbildung über die drei Spiegelflächen außeraxial bezüglich einer jeweiligen mittleren Spiegelachse vorgesehen ist, wobei alle Spiegelachsen der Spiegelflächen innerhalb einer Ebene angeordnet sind, dadurch gelöst, dass die Primär- und die Tertiärspiegelfläche konvexe Flächen gleicher Form sind, die symmetrisch bezüglich einer Symmetrieachse angeordnet sind, und dass die Sekundärspiegelfläche als konkave Fläche ausgebildet und symmetrisch zu den Primär- und Tertiärspiegelflächen und rotationssymmetrisch um die Symmetrieachse angeordnet ist, so dass alle drei Spiegelflächen konstruktiv eine axialsymmetrische On-Axis-Spiegelanordnung darstellen, bei der die optische Abbildung in der Art eines Off-Axis-Teleskops auf einen Empfänger übertragen wird.

Vorteilhaft sind die Primärspiegelfläche und die Tertiärspiegelfläche auf einer gemeinsamen, um die Symmetrieachse rotationssymmetrischen Oberfläche aufgebracht. Die Spiegelflächen selbst sind zweckmäßig asphärisch geformt und sind vorzugsweise Asphären höherer Ordnung.

In einer bevorzugten Ausführung ist die axialsymmetrische Spiegelanordnung für mindestens zwei Off-Axis-Strahlengänge zur Abbildung auf verschiedene Empfänger vorgesehen, wobei die Strahlengänge jeweils entlang von Ebenen verlaufen, die in einer Richtung durch die Symmetrieachse der Spiegelanordnung festgelegt sind, wobei sich bei Verwendung von mehr als zwei Off-Axis-Strahlengängen die Ebenen der Strahlengänge in der Symmetrieachse der Spiegelanordnung schneiden.

In besonderen Anwendungsfällen ist es zweckmäßig, dass zwei Off-Axis-Strahlengänge entlang ein und derselben Ebene angeordnet sind, wobei zur Aufnahme zueinander paralleler Eingangsstrahlenbündel großflächige Eingangsumlenkspiegel vorgesehen sind.
Dabei ist zur Separierung der gegenläufigen Off-Axis-Strahlengänge zweckmäßig eine Zentralabschattung innerhalb der Fläche der Eingangsumlenkspiegel vorhanden.
In einer ersten zweckmäßigen Ausführung ist die Zentralabschattung als Öffnung zum Durchlass des Abbildungsstrahlengangs zum Empfänger ausgebildet. Dabei kann einerseits der Empfänger direkt beleuchtet sein oder andererseits hinter der Öffnung des Eingangsumlenkspiegels ein Ausgangsumlenkspiegel angebracht werden, um den Abbildungsstrahlengang auf den Empfänger abzubilden.

In einer zweiten sinnvollen Variante ist die Zentralabschattung als ein aufgesetzter Ausgangsumlenkspiegel zur Reflexion des Abbildungsstrahlengangs auf den Empfänger ausgebildet, wobei der Ausgangsumlenkspiegel vorzugsweise keilförmig auf den Eingangsumlenkspiegel aufgesetzt ist.

In einer anderen Ausgestaltung werden zur Separierung der gegenläufigen Off-Axis-Strahlengänge zweckmäßig Strahlteiler verwendet. Vorzugsweise sind dazu dichroitische Strahlteiler vorgesehen.

Im Lichtweg des Eingangsstrahlenbündels zum Off-Axis-Strahlengang ist vorteilhaft vor dem Eingangsumlenkspiegel mindestens ein Depolarisator angeordnet, um die Polarisationsempfindlichkeit innerhalb der teleskopischen Abbildung zu verringern. Das ist dann von besonderer Bedeutung, wenn abzubildende Szenen teilweise oder großenteils polarisiertes Licht reflektieren (z.B. Wasser- oder Glasflächen etc.).

Zur Realisierung eines rotierenden Abtastsystems ist die On-Axis-Spiegelanordnung vorteilhaft so ausgebildet, dass sie um eine zur Symmetrieachse orthogonale Rotationsachse drehbar ist, wobei Eingangsumlenkspiegel und Ausgangsumlenkspiegel mit der Spiegelanordnung starr gekoppelt sind und ein zusätzlicher Planspiegel (sogenannter Halbwinkelspiegel) um dieselbe Rotationsachse mit halber Drehgeschwindigkeit gedreht wird, um den Off-Axis-Strahlengang auf einen stationär angeordneten Empfänger zu richten. Dieses rotierende Abtastsystem wird vorzugsweise mit zwei gegenläufigen Off-Axis-Strahlengängen betrieben.

Die Erfindung basiert auf der Überlegung, dass Schiefspiegler-Teleskope nur aufwendig justierbar sind und durch Umwelteinflüsse der Gefahr nachträglicher Dejustierung unterliegen, wobei eine symmetrische Spiegelanordnung zur Vereinfachung wünschenswert wäre. Überraschend raumsparend gelingt der Spagat zwischen dem Wunsch nach symmetrischem Aufbau und fehlerarmer optischer Abbildung einer Szene mittels eines justiertechnisch zweispiegeligen, rotationssymmetrischen On-Axis-Teleskops, das optisch als dreispiegeliger-Schiefspiegler betrieben wird, indem der Primärspiegel und der Tertiärspiegel Abschnitte ein und derselben Spiegelbasisfläche (Trägerfläche) sind. Das ist sowohl für die Fertigung als auch für die Justage des Teleskops vorteilhaft. Dabei sind gleichwertige optische Abbildungen in verschiedenen (vorzugsweise, aber nicht notwendig entgegengesetzten) Richtungen durch die Symmetrieachse realisierbar. Entgegengesetzt verlaufende Off-Axis-Strahlengänge innerhalb einer Ebene sind insbesondere dazu geeignet, ein einfaches rotierendes Abtastsystem zu ermöglichen.

Mit der erfindungsgemäßen Lösung ist es möglich, ein nicht abgeschattetes Spiegelteleskop (Schiefspiegler) zu realisieren, das einen einfachen Aufbau und eine einfache Justierung der Spiegelflächen zueinander gestattet. Des Weiteren ist unkompliziert eine rotierende Abtastung (Abbildung) realisierbar, die eine Anwendung in Radiometern ermöglicht.

Die Erfindung soll nachstehend anhand von Ausführungsbeispielen näher erläutert werden. Die Zeichnungen zeigen:
- Fig. 1:: eine Prinzipansicht der erfindungsgemäßen Schiefspiegler-Teleskopanordnung;
- Fig. 2:: eine Variante mit zwei gegenläufigen Off-Axis-Strahlengängen und Umlenkspiegeln, die parallele Eingangsstrahlenbündel schräg auf die Spiegelanordnung einkoppeln und einen aufgesetzten Ausgangsumlenkspiegel zum Empfänger aufweisen;
- Fig. 3:: eine Ausgestaltung des Grundprinzips nach Fig. 1, bei dem mehrere Off-Axis-Strahlengänge als parallele Eingangsstrahlenbündel unter verschiedenen Winkeln um die Symmetrieachse schräg auf die Spiegelanordnung einfallen;
- Fig. 4:: eine gegenüber Fig. 2 modifizierte Variante mit einer Öffnung im Eingangsumlenkspiegel zum Auskoppeln auf den Ausgangsumlenkspiegel zum Empfänger,
- Fig. 5:: eine weitere gegenüber Fig. 2 modifizierte Gestaltung, bei der zum Separieren der gegenläufigen Off-Axis-Strahlengänge dichroitische Strahlteiler verwendet werden;
- Fig. 6:: eine Anwendung der Erfindung als rotierendes Radiometer unter Verwendung der Ausgestaltung von Fig. 5 mit Drehung der Spiegelanordnung um eine zur Symmetrieachse orthogonale Rotationsachse und Abbildung auf stationäre Empfänger mittels sogenannter Halbwinkelspiegel.

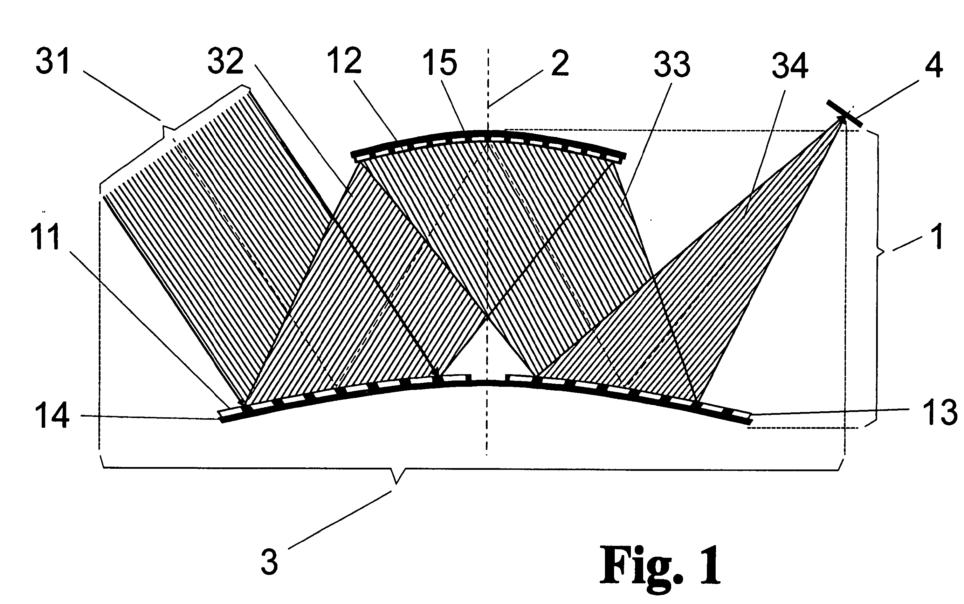

Das Schiefspiegler-Teleskop gemäß der Erfindung besteht in seinem Grundaufbau - wie in Fig. 1 dargestellt - aus einer Spiegelanordnung 1, die eine Symmetrieachse 2 aufweist und bei der ein Off-Axis-Strahlengang 3 von einem Eingangsstrahlenbündel 31 bis zur Abbildung auf einen Empfänger 4 entlang einer Ebene (hier: Zeichenebene) durch die Symmetrieachse 2 verläuft. Der Off-Axis-Strahlengang 3 benutzt dabei drei Spiegelflächen, eine Primärspiegelfläche 11, eine Sekundärspiegelfläche 12, und eine Tertiärspiegelfläche 13, wobei Primär- und Tertiärspiegelfläche 11 bzw. 13 auf ein und derselben Trägerfläche 14 der Spiegelanordnung 1 symmetrisch zur Symmetrieachse 2 liegen.
Die Spiegelanordnung 1 besteht daher aus entlang der Symmetrieachse 2 gleichsinnig gekrümmten Asphären, von denen die größere Trägerfläche 14 die konvexen Primär- und Tertiärspiegelflächen 11 und 13 trägt und die kleinere, darüber liegende Trägerfläche 15 an ihrer konkaven, der Trägerfläche 14 zugewandten Seite die Sekundärspiegelfläche 12 aufweist.
Das Eingangsstrahlenbündel 31 fällt - seitlich an der (rotationssymmetrisch um die Symmetrieachse 2 angeordneten) Sekundärspiegelfläche 12 vorbei - auf einen Bereich der Trägerfläche 14, der die Primärspiegelfläche 11 darstellt, unter einem solchen Winkel zur Symmetrieachse 2 ein, dass das von der Primärspiegelfläche 11 reflektierte Bündel 32 die konkave Sekundärspiegelfläche 12 großflächig und symmetrisch unter schrägem Einfall trifft. Das am Sekundärspiegel 12 reflektierte Bündel 33 trifft dann erneut auf die Trägerfläche 14 in einem Bereich, der bezüglich der Symmetrieachse 2 der Primärspiegelfläche 11 spiegelsymmetrisch gegenüberliegt und eine Tertiärspiegelfläche 13 zur Reflexion eines Bündels 34 auf den Empfänger 4 darstellt. Dabei sind Primärspiegelfläche 11 und Tertiärspiegelfläche 13 herstellungstechnisch als einheitliche vorzugsweise asphärische Spiegelflächen auf der rotationssymmetrisch geformten Trägerfläche 14 ausgeführt, die zusammen mit dem Sekundärspiegel 12 eine rotationssymmetrische Spiegelanordnung 1 darstellt.

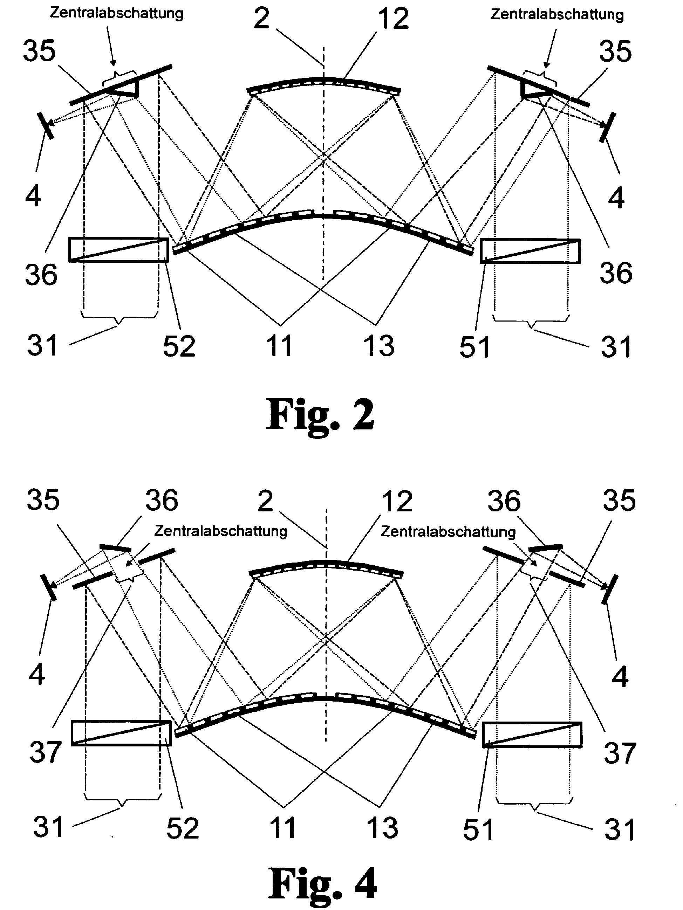

In einer bevorzugten Gestaltungsvariante der Erfindung gemäß Fig. 2 wird die Rotationssymmetrie der Spiegelanordnung 1 um deren Symmetrieachse 2 ausgenutzt, um die Spiegelanordnung 1 in wenigstens zwei Richtungen zu benutzen. Das kann z.B. dann vorteilhaft sein, wenn optische Elemente, wie z.B. Depolarisatoren 5, die im Eingangsstrahlenbündel 31 platziert werden müssen, um Polarisationseffekte innerhalb des Eingangsstrahlenbündels 31 zu verringern, nur begrenzte spektrale Transmissionsfenster aufweisen oder Empfänger 4 mit unterschiedlicher spektraler Empfindlichkeit benutzt werden, um einen möglichst großen Spektralbereich der abgebildeten Szene aufnehmen zu können.
Um zwei Eingangsstrahlenbündel 31 (z.B. mit unterschiedlicher spektraler Charakteristik) mit ein und derselben Spiegelanordnung 1 als Off-Axis-Strahlenbündel 3 abbilden zu können, werden zwei Eingangsumlenkspiegel 35 dazu verwendet, zueinander parallele (richtungsgleiche) Eingangsstrahlenbündel 31 so umzulenken, dass sie unter dem erforderlichen schrägen Einfallswinkel (bezüglich der Symmetrieachse 2) auf definierte Primärspiegelflächen 11 der Trägerfläche 14 einfallen.
In einer ersten Ausführung - wie sie in Fig. 2 gezeigt ist - werden zwei Off-Axis-Strahlenbündel 3 entgegengesetzt in einer Ebene (hier: Zeichenebene) auf die Spiegelanordnung 1 eingekoppelt, da hier - wie oben begründet - zwei unterschiedliche Wellenlängenbereiche empfangen werden sollen, um eine breitbandige spektrale Bandbreite (z.B. von 450 nm bis 14 µm) der optischen Abbildung zu erreichen. Dabei wird beispielsweise in einem Eingangsstrahlenbündel 31 durch einen Depolarisator 51 aus Magnesiumfluorid (MgF₂) ein Wellenlängenbereich von 0,45 bis 7 µm und im anderen Eingangsstrahlenbündel 31 durch einen Depolarisator 52 aus Kadmiumselenid (CdSe) ein Wellenlängenbereich von 7 bis 14 µm übertragen. Zum Separieren der unterschiedlichen Strahlenbündel 3 muss in der Fläche der Eingangsumlenkspiegel 35 eine zentrale Abschattung vorgenommen werden, die in diesem Fall jeweils durch einen kleinen aufgesetzten Ausgangsumlenkspiegel 36 verursacht wird, um das durch die Spiegelanordnung 1 durchgelaufene Strahlenbündel 3 auf den Empfänger 4 auszukoppeln.

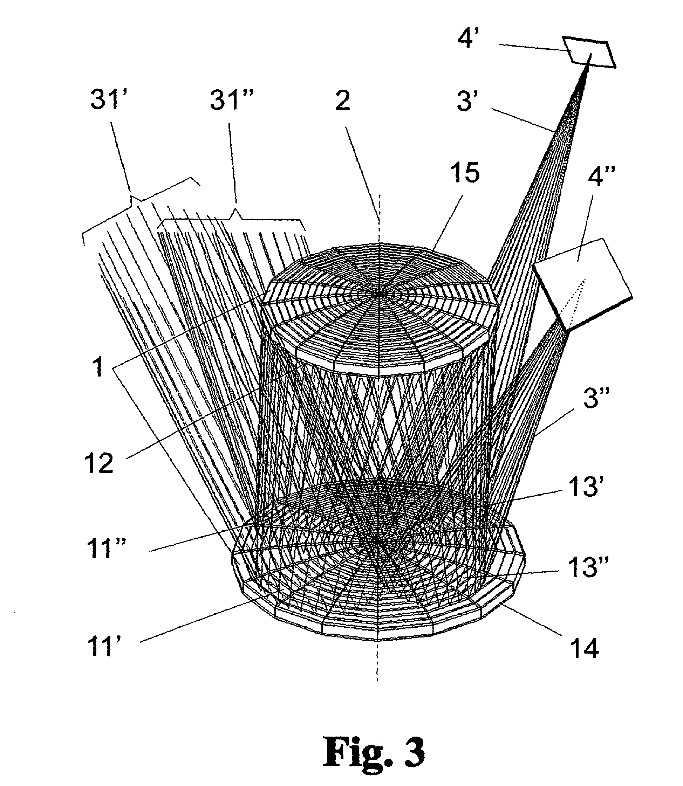

Will man Abschattungen vermeiden oder sind mehr als zwei Wellenlängenbereiche abzutasten, um eine breitbandige Abbildung zu erhalten, so ist es für das vorherige und alle nachfolgenden Beispiele möglich, die Mehrzahl von Off-Axis-Strahlengängen 3 unter definierten Winkeln um die Symmetrieachse 2 so zu positionieren, dass sie sich lediglich in der Symmetrieachse 2 schneiden.
Eine solche zweite Konfiguration zur Mehrfachnutzung der Spiegelanordnung 1 zeigt Fig. 3 für Eingangsstrahlenbündel 31', 31" usw., die jeweils an örtlich unterschiedlichen Primärspiegelflächen 11', 11" etc. über die gemeinsame Sekundärspiegelfläche 12 und örtlich verschiedene Tertiärspiegelflächen 13', 13" etc., die jeweils - bezüglich der Symmetrieachse 2 - symmetrisch zur zugehörigen Primärspiegelfläche 11', 11 " etc. liegen, auf eine entsprechende Anzahl von unterschiedlich um die Symmetrieachse 2 verteilten Empfängern 4', 4" usw. abgebildet werden. Die einzelnen Off-Axis-Strahlenbündel 3', 3" etc. verlaufen dabei jeweils entlang einer Ebene, wobei sich die Ebenen aller Strahlenbündel 3', 3" etc. in der Symmetrieachse 2 schneiden. Bei den unterschiedlich definierten Primärspiegelflächen 11', 11 " usw. und Tertiärspiegelflächen 13', 13" usw. kann es sich sowohl um teilweise überlappende Spiegelbereiche als auch um völlig getrennte Spiegelflächen auf der gemeinsamen Trägerfläche 14 handeln. Aus Übersichtsgründen wurde in Fig. 3 auf die Darstellung von Eingangsumlenkspiegeln 35 und Depolarisatoren 5 verzichtet, obwohl diese für die Realisierung (polarisationsverminderter) breitbandiger Abbildungen von ein und derselben Szene eigentlich zwingend erforderlich sind.

In einer anderen Ausführung mit zwei innerhalb einer Ebene verlaufenden Off-Axis-Strahlengängen 3 - wie in Fig. 4 dargestellt - erfolgt die Abschattung in der Mitte des Eingangsumlenkspiegels 35 durch eine Öffnung 37, durch die das von der Tertiärspiegelfläche 13 reflektierte Bündel 34 auf den hinter dem Eingangsumlenkspiegel 35 angebrachten Ausgangsumlenkspiegel 36 fällt und von dort auf den Empfänger 4 reflektiert wird. Dieser Strahlverlauf ist für zwei entgegengesetzt einlaufende Off-Axis-Strahlenbündel 3 exakt spiegelsymmetrisch.

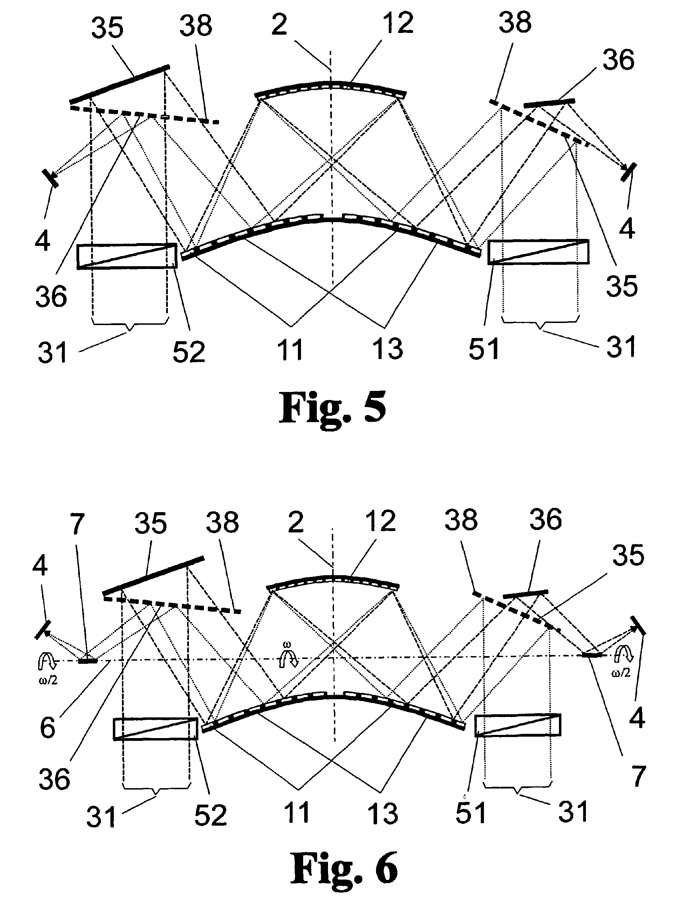

In einer dritten Ausführungsvariante erfolgt die Einkopplung und Separierung von zwei entgegengesetzt verlaufenden Off-Axis-Strahlenbündel 3 über Strahlteiler und Vollspiegel, wie in Fig. 5 dargestellt. Dabei wird vorausgesetzt, dass sich die Wellenlängenbereiche, die von den Depolarisatoren 51 und 52 in den beiden Eingangsstrahlenbündeln 31 durchgelassen werden, nicht überschneiden und dass es einen dichroitischen Strahlteiler 38 gibt, der die beiden Wellenlängenbereiche ausreichend scharf trennt.
Für das rechte Eingangsstrahlenbündel 31, in dem der Depolarisator 51 angeordnet ist, wird der dichroitische Strahlteiler 38 funktionell als Eingangsumlenkspiegel 35 verwendet, wenn der dichroitische Strahlteiler 38 den vom Depolarisator 51 durchgelassenen kurzwelligen Wellenlängenbereich reflektiert. Das linke durch den Depolarisator 52 eintretende Eingangsstrahlenbündel 31 fällt zunächst auf den als Ausgangsumlenkspiegel 36 angeordneten dichroitischen Strahlteiler 38, durchquert diesen, weil die vom Depolarisator 52 durchgelassenen langwelligen Spektralanteile vom dichroitischen Strahlteiler 38 nicht reflektiert werden, und wird so durch den (wie in den vorhergehenden Beispielen ausgerichteten) Eingangsumlenkspiegel 35, der ein Vollspiegel ist, zur Primärspiegelfläche 11 umgelenkt und wie oben beschrieben durch die Spiegelanordnung 1 als Off-Axis-Strahlengang 3 übertragen. Für den Fall, dass sich zwei verschiedene dichroitische Strahlteiler 38 finden lassen, die nahezu entgegengesetzte Transmissions- und Reflexionscharakteristik aufweisen, kann entweder die für das linke Eingangsstrahlenbündel 31 gezeigte Anordnung (mit dichroitischem Ausgangsumlenkspiegel 36 und normalem Eingangsumlenkspiegel 35) spiegelsymmetrisch auch im rechtsseitig durch den Depolarisator 51 einfallenden Eingangsstrahlenbündel 31 oder die für das rechte Eingangsstrahlenbündel 31 gezeigte Spiegelanordnung genauso im linken Einfallsstrahlenbündel 31 verwendet werden.

In einer besonderen Ausführungsvariante ist eine der oben beschriebenen Varianten der mehrkanalig benutzten, rotationssymmetrischen Spiegelanordnung 1, vorzugsweise die Gestaltung gemäß Fig. 5, als ein umlaufendes Radiometer mit Schiefspiegler-Teleskop ausgebildet.
Dazu wird die Spiegelanordnung 1 mit den zugeordneten Komponenten, Eingangs- und Ausgangsumlenkspiegeln 35 und 36 sowie den gegebenenfalls vorhandenen Depolarisatoren 51 und 52, die starr mit der Spiegelanordnung 1 verbunden sind, mit einer Winkelgeschwindigkeit ω um eine Rotationsachse 6 gedreht, um eine Rundumabtastung im Raum zu erreichen. Nachdem die Off-Axis-Strahlengänge 3, wie z.B. zu Fig. 2 beschrieben, die Spiegelanordnung 1 durchlaufen haben, wird in diesem Beispiel der jeweilige Ausgangsumlenkspiegel 36 dazu benutzt, das von der Tertiärspiegelfläche 13 reflektierte Bündel 34 auf einen Planspiegel, einen sogenannten Halbwinkelspiegel 7, zu richten, der auf der Rotationsachse 6 angeordnet ist und sich mit der halben Winkelgeschwindigkeit ω/2 dreht, um die Bilddrehung zu kompensieren und somit die optische Abbildung auf einen jeweils ortfest angebrachten Empfänger 4 zu übertragen.
Damit sind bei kontinuierlicher Umlaufbewegung des robusten Schiefspiegler-Teleskops um die Rotationsachse 6, insbesondere zur Abtastung einer Planetenoberfläche aus dem Weltall, systematische linienförmige Abtastungen (Linienscans) möglich, indem durch ein freies Abtastfenster ca. 160° die optische Abbildung einer Szene (z.B. Erdoberfläche) erfolgt und im restlichen Teil einer Umdrehung um die Rotationsachse 6 regelmäßig Kalibrierungen des Abtastsystems erfolgen.

### Bezugszeichenliste

- 1: (axialsymmetrische) Spiegelanordnung
- 11: Primärspiegelfläche
- 11',11",...: Primärspiegelflächen
- 12: Sekundärspiegelfläche
- 13,: Tertiärspiegelfläche
- 13',13",...: Tertiärspiegelflächen
- 14: Trägerfläche (für Primär- und Tertiärspiegelfläche)
- 15: Trägerfläche (des Sekundärspiegels)

- 2: Symmetrieachse

- 3: Off-Axis-Strahlengang
- 3',3"...: Off-Axis-Strahlengänge
- 31: Eingangsstrahlenbündel
- 31',31",...: Eingangsstrahlenbündel
- 32: (vom Primärspiegel) reflektiertes Bündel
- 33: (vom Sekundärspiegel) reflektiertes Bündel
- 34: (vom Tertiärspiegel) reflektiertes Bündel
- 35: Eingangsumlenkspiegel
- 36: Ausgangsumlenkspiegel
- 37: Öffnung
- 38: dichroitischer Strahlteiler

- 4: Empfänger
- 4',4",...: Empfänger

- 5: Depolarisator
- 51, 52: Depolarisatoren (mit unterschiedlichen Transmissionsbereichen)

- 6: Rotationsachse

- 7: Planspiegel (Halbwinkelspiegel)

- ω: Drehgeschwindigkeit

## Patentansprüche

1. Schiefspiegler-Teleskop mit drei Spiegelflächen, bei dem eine optische Abbildung über die drei Spiegelflächen außeraxial bezüglich einer jeweiligen mittleren Spiegelachse vorgesehen ist, wobei alle Spiegelachsen der Spiegelflächen innerhalb einer Ebene angeordnet sind, **dadurch gekennzeichnet, dass**
die Primär- und die Tertiärspiegelflächen (11; 13) konvexe Flächen gleicher Form sind, die symmetrisch bezüglich einer Symmetrieachse (2) angeordnet sind, und
die Sekundärspiegelfläche (12) als konkave Fläche ausgebildet und symmetrisch zu den Primär- und Tertiärspiegelflächen (11; 13) und rotationssymmetrisch um die Symmetrieachse (2) angeordnet ist, so dass alle drei Spiegelflächen (11, 12, 13) konstruktiv eine axialsymmetrische Spiegelanordnung (1) darstellen, bei der die optische Abbildung in der Art eines Off-Axis-Teleskops auf einen Empfänger (4) übertragen wird.

2. Anordnung nach Anspruch 1, **dadurch gekennzeichnet, dass**
die Primärspiegelfläche (11) und die Tertiärspiegelfläche (13) auf einer gemeinsamen, um die Symmetrieachse (2) rotationssymmetrischen Trägerfläche (14) aufgebracht sind.

3. Anordnung nach Anspruch 1, **dadurch gekennzeichnet, dass**
die Spiegelflächen asphärisch sind.

4. Anordnung nach Anspruch 3, **dadurch gekennzeichnet, dass**
die Spiegelflächen Asphären höherer Ordnung sind.

5. Anordnung nach Anspruch 1, **dadurch gekennzeichnet, dass**
die axialsymmetrische Spiegelanordnung (1) für mindestens zwei Off-Axis-Strahlengänge (3) zur Abbildung auf verschiedene Empfänger (4) vorgesehen ist, wobei die Strahlengänge (3) jeweils entlang von Ebenen verlaufen, die in einer Richtung durch die Symmetrieachse (2) festgelegt sind.

6. Anordnung nach Anspruch 5, **dadurch gekennzeichnet, dass**
bei Verwendung von mehr als zwei Off-Axis-Strahlengängen (3) sich die Ebenen der Strahlengänge in der Symmetrieachse (2) der Spiegelanordnung (1) schneiden.

7. Anordnung nach Anspruch 5, **dadurch gekennzeichnet, dass**
zwei Off-Axis-Strahlengänge (3) gegenläufig entlang ein und derselben Ebene angeordnet sind, wobei zur Aufnahme zueinander paralleler Eingangsstrahlenbündel (31) großflächige Eingangsumlenkspiegel (35) vorgesehen sind.

8. Anordnung nach Anspruch 7, **dadurch gekennzeichnet, dass**
zur Separierung der gegenläufigen Off-Axis-Strahlengänge (3) eine Zentralabschattung innerhalb der Eingangsumlenkspiegel (35) vorhanden ist.

9. Anordnung nach Anspruch 8, **dadurch gekennzeichnet, dass**
die Zentralabschattung als eine Öffnung (37) zum Durchlass des Off-Axis-Strahlengangs (3) zum Empfänger (4) ausgebildet ist.

10. Anordnung nach Anspruch 9, **dadurch gekennzeichnet, dass**
hinter der Öffnung (37) des Eingangsumlenkspiegels (35) ein Ausgangsumlenkspiegel (36) angebracht ist, um den Off-Axis-Strahlengang (3) auf den Empfänger (4) abzubilden.

11. Anordnung nach Anspruch 8, **dadurch gekennzeichnet, dass**
die Zentralabschattung als ein aufgesetzter Ausgangsumlenkspiegel (36) zur Reflexion des Off-Axis-Strahlengangs (3) auf den Empfänger (4) ausgebildet ist.

12. Anordnung nach Anspruch 11, **dadurch gekennzeichnet, dass**
der Ausgangsumlenkspiegel (36) keilförmig auf den Eingangsumlenkspiegel (35) aufgesetzt ist.

13. Anordnung nach Anspruch 7, **dadurch gekennzeichnet, dass**
zur Unterdrückung von Polarisationserscheinungen im Eingangsstrahlenbündel (31) der Off-Axis-Strahlengänge (3) Depolarisatoren (5; 51, 52) in den Eingangsstrahlenbündeln (31) vorhanden sind.

14. Anordnung nach Anspruch 7, **dadurch gekennzeichnet, dass**
zur Separierung der gegenläufigen Off-Axis-Strahlengänge (3) Strahlteiler vorhanden sind.

15. Anordnung nach Anspruch 14, **dadurch gekennzeichnet, dass**
zur Separierung der Strahlengänge (3) dichroitische Strahlteiler (38) vorgesehen sind.

16. Anordnung nach Anspruch 7, **dadurch gekennzeichnet, dass**
die axialsymmetrische Spiegelanordnung (1) zur Realisierung eines rotierenden Abtastsystems um eine zur Symmetrieachse (2) orthogonale Rotationsachse (6) drehbar ist, wobei Eingangsumlenkspiegel (35) und Ausgangsumlenkspiegel (36) mit der Spiegelanordnung (1) starr gekoppelt sind und mit einer definierten Drehgeschwindigkeit (ω) rotieren, und jeweils ein zusätzlicher Halbwinkelspiegel (7) auf derselben Rotationsachse (6) angeordnet ist, der zur optischen Abbildung der beiden Off-Axis-Strahlengänge (3) auf stationäre Empfänger (4) mit halber Drehgeschwindigkeit (ω/2) gegenüber der Drehgeschwindigkeit (ω) der Spiegelanordnung (1) gedreht wird.

## Claims

1. An oblique reflector telescope with three mirror surfaces, wherein optical imaging is envisaged via said three mirror surfaces extra-axially with respect to a respective central axis of reflection, all axes of reflection of the mirror surfaces being arranged within one plane, **characterized in that**
the primary and tertiary mirror surfaces (11; 13) are convex surfaces of the same shape, which are arranged symmetrically with respect to an axis of symmetry (2), and
the secondary mirror surface (12) is provided as a concave surface and is arranged symmetrically to the primary and tertiary mirror surfaces (11; 13) and rotation-symmetrically around the axis of symmetry (2), so that all three mirror surfaces (11, 12, 13) constructionally represent an axially symmetric mirror assembly (1), wherein the optical image is transmitted to a receiver (4) in the manner of an off-axis telescope.

2. Assembly according to claim 1, **characterized in that** the primary mirror surface (11) and the tertiary mirror surface (13) are applied to a common carrier surface (14) having rotational symmetry around the axis of symmetry (2).

3. Assembly according to claim 1, **characterized in that** the mirror surfaces are aspheric.

4. Assembly according to claim 3, **characterized in that** the mirror surfaces are higher-order aspheres.

5. Assembly according to claim 1, **characterized in that** the axially symmetric mirror assembly (1) is provided for at least two off-axis beam paths (3) for imaging to different receivers (4), and the beam paths (3) each extend along planes that are defined by the axis of symmetry (2) in one direction.

6. Assembly according to claim 5, **characterized in that** the use of more than two off-axis beam paths (3) results in the planes of the beam paths intersecting in the axis of symmetry (2) of the mirror assembly (1).

7. Assembly according to claim 5, **characterized in that** two off-axis beam paths (3) are arranged in opposite directions along the same plane and large-area input deflection mirrors (35) are provided to receive mutually parallel input beams (31).

8. Assembly according to claim 7, **characterized in that**, in order to separate the opposite off-axis beam paths (3) from one another, a central shading is present within the input deflection mirrors (35).

9. Assembly according to claim 8, **characterized in that** the central shading is provided as an opening (37) for transmission of the off-axis beam path (3) to the receiver (4).

10. Assembly according to claim 9, **characterized in that** an output deflection mirror (36) is mounted behind the opening (37) of the input deflection mirror (35) in order to image the off-axis beam path (3) to the receiver (4).

11. Assembly according to claim 8, **characterized in that** the central shading is provided as a mounted output deflection mirror (36) for reflection of the off-axis beam path (3) to the receiver (4).

12. Assembly according to claim 11, **characterized in that** the output deflection mirror (36) is mounted on the input deflection mirror (35) in a wedge-like manner.

13. Assembly according to claim 7, **characterized in that**, in order to suppress polarization phenomena in the input beam (31) of the off-axis beampaths (3), depolarizers (5; 51, 52) are present in the input beams (31).

14. Assembly according to claim 7, **characterized in that** beam splitters are present for separating the opposed off-axis beam paths (3).

15. Assembly according to claim 14, **characterized in that** dichroic beam splitters (38) are provided for separating the beam paths (3).

16. Assembly according to claim 7, **characterized in that**, in order to realize a rotating scanning system, the axially symmetric mirror assembly (1) is rotatable about an axis of rotation (6) that is orthogonal to the axis of symmetry (2), said input deflection mirror (35) and said output deflection mirror (36) being rigidly coupled with the mirror assembly (1) and rotating at a defined rotary speed ( ), with an additional half-angle mirror (7) being respectively arranged on the same axis of rotation (6) and being rotated at a rotary speed ( /2), which is half the rotary speed ( ) of the mirror assembly (1), for optical imaging of the two off-axis beam paths (3) on stationary receivers (4).

## Revendications

1. Télescope à réflecteurs obliques avec trois surfaces de miroir, dans lequel une projection optique est prévue au moyen desdites trois surfaces de miroir de manière désaxée par rapport à un axe de réflexion central respectif, tous les axes de réflexion des surfaces de miroir étant disposés dans un seul plan,
**caractérisé en ce que**
les surfaces de miroir primaire et tertiaire (11; 13) sont des surfaces convexes de même forme, qui sont disposées symétriquement par rapport à un axe de symétrie (2), et
que la surface de miroir secondaire (12) est une surface concave qui est disposée de manière symétrique aux surfaces de miroir primaire et tertiaire (11; 13) et symétrique en rotation autour de l'axe de symétrie (2), de sorte que toutes les trois surfaces de miroir (11, 12, 13) constituissent constructivement un ensemble de miroirs à symétrie axiale (1), dans lequel la projection optique sur un récepteur (4) s'effectue à la manière d'un télescope désaxé.

2. Ensemble selon la revendication 1, **caractérisé en ce que** la surface de miroir primaire (11) et la surface de miroir tertiaire (13) sont appliquées sur une surface porteuse (14) commune qui est symétrique en rotation autour de l'axe de symétrie (2).

3. Ensemble selon la revendication 1, **caractérisé en ce que** les surfaces de miroir sont des surfaces asphériques.

4. Ensemble selon la revendication 3, **caractérisé en ce que** les surfaces de miroir sont des asphères d'ordre supérieur.

5. Ensemble selon la revendication 1, **caractérisé en ce que** l'ensemble de miroirs à symétrie axiale (1) est destiné pour au moins deux chemins optiques désaxés (3) pour la projection sur différents récepteurs (4), et que chacun desdits chemins optiques (3) s'étend selon les plans qui sont définis par l'axe de symétrie (2) dans une direction.

6. Ensemble selon la revendication 5, **caractérisé en ce que** l'utilisation de plus de deux chemins optiques désaxés (3) a pour résultat que les plans desdits chemins optiques se croisent dans l'axe de symétrie (2) de l'ensemble de miroirs (1).

7. Ensemble selon la revendication 5, **caractérisé en ce que** deux chemins optiques désaxés (3) sont disposés en directions opposées selon le même plan, et des miroirs de renvoi en entrée (35), qui présentent une grande surface, sont prévus pour recevoir des faisceaux d'entrée (31) parallèles les uns aux autres.

8. Ensemble selon la revendication 7, **caractérisé en ce que** l'on prévoit un ombrage central dans les miroirs de renvoi en entrée (35) afin de séparer les chemins optiques désaxés (3) mutuellement opposés.

9. Ensemble selon la revendication 8, **caractérisé en ce que** l'ombrage central se présente sous la forme d'une ouverture (37) laissant passer le chemin optique désaxé (3) au récepteur (4).

10. Ensemble selon la revendication 9, **caractérisé en ce qu'**un miroir de renvoi en sortie (36) est monté derrière l'ouverture (37) du miroir de renvoi en entrée (35) afin de projeter le chemin optique désaxé (3) sur le récepteur (4).

11. Ensemble selon la revendication 8, **caractérisé en ce que** l'ombrage central se présente sous la forme d'un miroir de renvoi en sortie (36) qui est monté de manière à réfléchir le chemin optique désaxé (3) vers le récepteur (4).

12. Ensemble selon la revendication 11, **caractérisé en ce que** le miroir de renvoi en sortie (36) est placé de manière cunéiforme sur le miroir de renvoi en entrée (35).

13. Ensemble selon la revendication 7, **caractérisé en ce que**, dans le but de supprimer des phénomènes de polarisation dans le faisceau d'entrée (31) desdits chemins optiques désaxés (3), on dispose des dépolarisateurs (5; 51, 52) dans les faisceaux d'entrée (31).

14. Ensemble selon la revendication 7, **caractérisé en ce que** l'on prévoit des séparateurs de faisceau pour séparer les chemins optiques désaxés (3) mutuellement opposés.

15. Ensemble selon la revendication 14, **caractérisé en ce que** l'on prévoit des séparateurs dichro ques (38) pour séparer lesdits chemins optiques (3).

16. Ensemble selon la revendication 7, **caractérisé en ce que**, dans le but de réaliser un système de balayage rotatif, l'ensemble de miroirs à symétrie axiale (1) est rotatif autour d'un axe de rotation (6) qui est orthogonal à l'axe de symétrie (2), ledit miroir de renvoi en entrée (35) et ledit miroir de renvoi en sortie (36) étant rigidement accouplé audit ensemble de miroirs (1) et rotant à une vitesse de rotation définie ( ), et un miroir de demi-angle (7) additionnel étant respectivement disposé sur le même axe de rotation (6) et étant roté à une vitesse de rotation ( /2), qui est la moitié de la vitesse de rotation ( ) de l'ensemble de miroirs (1), pour la projection optique des deux chemins optiques désaxés (3) sur des récepteurs (4) stationnaires.
